# EUROPÄISCHE PATENTANMELDUNG

(11) **EP 0 981 990 A1**
(43) Veröffentlichungstag der Anmeldung: **01.03.2000**
(21) Anmeldenummer: 98117573.0
(22) Anmeldetag: 16.09.1998
(51) Int. Cl.: A47J 37/07

(54) **Bräter, ausgebildet als Tisch- oder Standgerät**

(30) Priorität: 28.08.1998 DE 29815425 U
(71) Anmelder: Metallverarbeitung O. Klahr, 35687 Dillenburg (DE)
(72) Erfinder: Klahr, Ottfried, 35678 Dillenburg (DE)
(74) Vertreter: Pollmeier, Felix, Dipl.-Ing

(57) **Zusammenfassung**

Ein Bräter, ausgebildet als Tischgerät oder mit Standbeinen bestücktes Standgerät, umfassend ein Gerätegehäuse, läßt sich variabel verwenden, wenn das Gerätegehäuse (1) zur wahlweisen Aufnahme eines mit allen Funktionselementen (7, 8, 9, 10) ausgerüstetes Gas-Brennereinschubes (3) oder eines Holzkohle-Einschubes (4) ausgebildet ist.

## Beschreibung

Die Erfindung betrifft einen Bräter, ausgebildet als Tischgerät oder mit Standbeinen bestücktes Standgerät, umfassend ein Gerätegehäuse.

Diese beiden Gerätearten unterscheiden sich dadurch voneinander, daß das Tischgerät nur sehr kurze Bein aufweist, während bei dem Standgerät die vier an den Ecken der Gerätewanne angebrachten Beine von solcher Länge sind, daß eine Bedienungsperson bei auf dem Boden aufgestelltem Standgerät in bequemer Höhe arbeiten kann.

Ein solcher sowohl als Stand- als auch als Tischgerät zu benutzender, als Gasbrenner ausgebildeter Bräter ist durch das DE-U-29 620 678.4 bekanntgeworden. Er besteht aus einer Gerätewanne mit einer darin angeordneten, von einem Zünder zu zündenden Brennereinheit, die mehrere annähernd U-förmige, mit Gas-Austrittsöffnungen versehene Rohrschenkel und eine diesen zugeordnete Gaszuführung aufweist. Daneben sind in verschiedensten Varianten hinlänglich bekannte Grillgeräte mit Holzkohlen- bzw. Brikett-Feuerung bekannt.

Der Erfindung liegt die Aufgabe zugrunde, einen Bräter der eingangs genannten Art in seiner Verwendung variabler zu gestalten.

Diese Aufgabe wird erfindungsgemäß dadurch gelöst, daß das Gerätegehäuse zur wahlweisen Aufnahme eines mit allen Funktionselementen ausgerüsteten Gas-Brennereinschubes oder eines Holzkohle-Einschubes ausgebildet ist.

Damit ist es auf einfache Weise möglich, trotz des Vorhandenseins nur eines Gerätegehäuses dennoch den individuellen Wünschen des Benutzers zu entsprechen, nämlich das erfindungsgemäß erreichte Kombigehäuse durch einfachen Austausch der Einschübe von einer Gasfeuerung auf eine Kohlefeuerung - und umgekehrt - umzurüsten. Der Gas-Brennereinschub weist hierbei von vornherein alle notwendigen Funktionselemente, d.h. insbesondere die Brennerröhrchen und den Piezozünder sowie die notwendigen Schaltknöpfe auf und braucht nach dem Einschieben in die Einschubausnehmung mit seiner Zuführung lediglich noch an eine Gasflasche angeschlossen zu werden bzw. diese kann sogar vor dem Einschieben schon über ihren Schlauch an dem Gas-Brennereinschub angeschlossen werden. Es liegt im Rahmen der Erfindung, das Kombigehäuse alternativ mit einem zeichnerisch nicht dargestellten, von vornherein ebenfalls mit allen Funktionselementen versehenen Elektrobrennereinschub zu bestücken.

Eine Ausgestaltung der Erfindung sieht vor, daß an den Innenflächen der beiden Längswände des Gerätegehäuses einander fluchtend gegenüberliegende Führungsstreben angeordnet sind. Diese ermöglichen nicht nur eine zusätzliche Führung beim Einschieben des in seiner Höhe größer als der Holzkohle-Einschub bemessenen Gas-Brennereinschubes, sondern erlauben es gleichzeitig, den Holzkohle-Einschub in verschiedenen Höhenlagen vorzusehen.

Weitere Einzelheiten und Vorteile der Erfindung ergeben sich aus den Ansprüchen und der nachfolgenden Beschreibung, in der in den Zeichnungen dargestellte Ausführungsbeispiele des Gegenstandes der Erfindung näher erläutert sind. Es zeigen;
- Fig. 1: eine perspektivische Gesamtansicht eines Bräter-Kombigehäuses mit darin eingeschobenem Gas-Brennereinschub; und
- Fig. 2: in perspektivischer Ansicht das Gehäuse gemäß Fig.1, demgegenüber hier aber mit einem Holzkohle-Einschub bestückt.

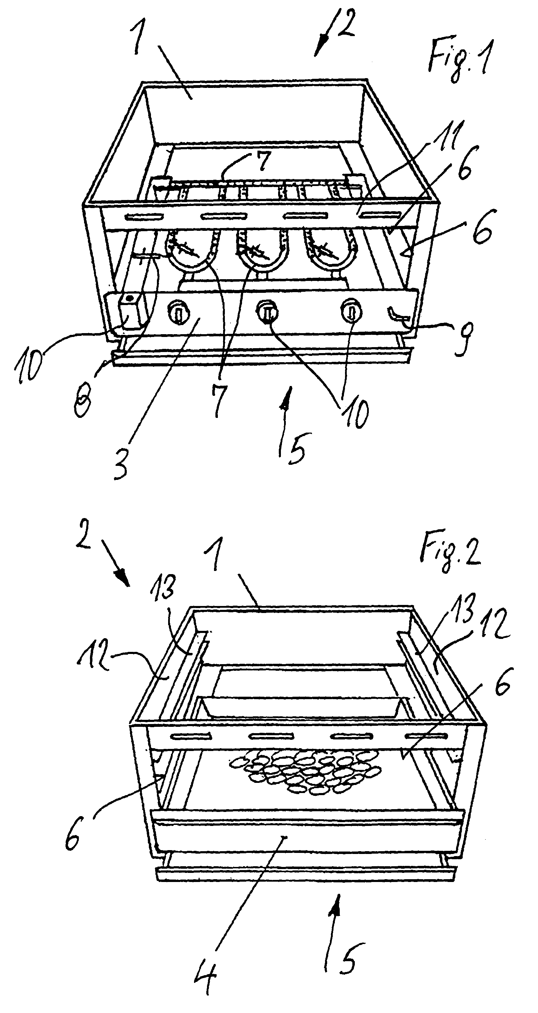

In den Figuren 1 und 2 sind Kombi-Gerätegehäuse 1 von als solche hinlänglich bekannten, üblich an den Ecken mit Standbeinen bestückten Brätern 2 gezeigt. Bei der ersten Ausführung nach Fig. 1 ist das Gerätegehäuse 1 mit einem Gas-Brennereinschub 3 und bei der Variante nach Fig. 2 mit einem Holzkohle-Einschub 4 bestückt; alternativ kann auch ein nicht gezeigter Elektrobrätereinschub benutzt werden. Die wahlweise unterschiedliche Umrüstung auf eine andere Befeuerungsart ermöglicht eine jeweils an der vorderen, d.h. Bedienungsseite 5 des Gerätegehäuses 1 ausgebildete Einschubausnehmeung 6, in die sich wunschweise entweder der Gas-Brennereinschub 3 oder der Holzkohle-Einschub 4 oder ein Elektrobrätereinschub in die Tiefe des Gehäuses 1 einschieben läßt.

Der Gas-Brennereinschub 3 ist von vornherein mit allen Funktionselementen ausgerüstet, d.h. insbesondere den mit Gasaustrittsöffnungen versehenen Brennerröhrchen 7, einem Piezo-Zünder 8, einem Gaszuführungsanschluß 9 zur Verbindung an eine nicht gezeigte Gasflasche und den notwendigen Schalt- bzw. Einstellknöpfen 10. Eine oberhalb der Einschubausnehmung 6 verbleibende Blende 11 kann nach unten hin so bemessen werden, daß nach dem Einsetzen des Gas-Brennereinschubes 3 eine geschlossene Vorderfront vorliegt. Das Gerätegehäuse 1 weist zudem an den Innenflächen 12 der beiden Längswände einander fluchtend gegenüberliegend angeordnete Führungsstreben 13 auf, die insbesondere beim Einschieben des Gas-Brennereinschubes 3 eine zusätzliche Führungssicherheit gewährleisten und es zudem erlauben, den Holzkohle-Einschub 4 abweichend von der in Fig. 2 gezeigten Einschublage in höherer Lage vorzusehen. Die Führungsstreben 13 sind im Querschnitt U-förmig, so daß sie zwei unterschiedliche Höhenlagen definieren.

## Patentansprüche

1. Bräter, ausgebildet als Tischgerät oder mit Standbeinen bestücktes Standgerät, umfassend ein Gerätegehäuse,
**dadurch gekennzeichnet,**
daß das Gerätegehäuse (1) zur wahlweisen Aufnahme eines mit allen Funktionselementen (7, 8,9, 10) ausgerüsteten Gas-Brennereinschubes (3) oder eines Holzkohle-Einschubes (4) ausgebildet ist.

2. Bräter nach Anspruch 1,
**dadurch gekennzeichnet,**
daß das Gerätegehäuse (1) an seiner Bedienungsseite (5) mit einer Einschubausnehmung (6) ausgebildet ist.

3. Bräter nach Anspruch 1 oder 2,
**dadurch gekennzeichnet,**
daß an den Innenflächen (12) der beiden Längswände des Gerätegehäuses (1) einander fluchtend gegenüberliegende Führungsstreben (13) angeordnet sind.
